# EUROPEAN PATENT APPLICATION

(11) **EP 3 835 033 A1**
(43) Date of publication of application: **16.06.2021**
(21) Application number: 18933492.3
(22) Date of filing: 13.09.2018
(51) Int. Cl.: B29C 64/165, B29C 64/295, B29C 64/307

(54) **METHOD FOR MANUFACTURING SENSOR BY MEANS OF PRINTING**

(71) Applicant: Siemens Ltd. China, Beijing 100102 (CN)
(72) Inventor: LI, Changpeng, Beijing 100102 (CN); CHEN, Wenqu, Beijing 102445 (CN); CHEN, Guofeng, Shanghai 200135 (CN)
(74) Representative: Isarpatent
(86) International application number: PCT/CN2018/105527
(87) International publication number: WO 2020/051843

(57) **Abstract**

Disclosed is a method for printing a sensor, the method comprising the following steps: step S1, spreading first powder in a forming cylinder of a binder spray forming device, and carrying out binder spray printing from bottom to top according to a sensor model so as to form a sensor shell having a first accommodating space in the middle of a top opening, and an accommodating cavity provided in the sensor shell; step S2, spreading second powder in the forming cylinder of the binder spray forming device, and carrying out binder spray printing from bottom to top according to the sensor model, so as to form a sensor; step S3, lifting up the accommodating cavity from bottom to top, and recovering the first powder in the accommodating cavity; step S4, putting the sensor in the sensor shell, and removing the binder from the sensor and the sensor shell; and step S5, sintering the sensor and the sensor shell so as to form a sensor element. The method for printing a sensor is lower in cost and higher in efficiency.

## Description

### Technical field

The present invention relates to the field of additive manufacturing, in particular to a method for manufacturing a sensor by printing.

### Background art

Additive manufacturing technology is an important 3D printing technology. Additive manufacturing technology can rapidly manufacture a pre-designed CAD model, and can manufacture structurally complex components within a short time. Selective laser melting (Selected Laser Melting, SLM) technology is a type of additive manufacturing technology, which can rapidly manufacture a component identical to a CAD model by laser sintering. SLM technology is widely used at the present time. Unlike conventional material removal mechanisms, additive manufacturing is based on exactly the opposite concept of manufacturing by the addition of material (materials incremental manufacturing philosophy), wherein SLM uses high-power laser light to melt a metal powder, and builds a part/component layer by layer via a 3D CAD input; in this way, it is possible to successfully manufacture components having complex internal channels.

Another specific strong point of additive manufacturing is in the manufacture of components with hybrid structures, e.g. embedded sensors. However, due to the high melting temperature of the metal powder used in additive manufacturing, embedded sensors would overheat and fail under the power of the high-intensity laser light used to melt the metal powder in additive manufacturing. This is because sensors are generally semiconductor devices, and the materials will experience cracking or a change in composition if the temperature is too cold or too hot. If SLM technology has to be used to print a sensor, then thermal isolation measures can be taken, but techniques for the setting of thermal isolation plates involve a high degree of difficulty, and good sealing must also be ensured; thus, such technical solutions are currently still at the theoretical stage, and have not yet been implemented in practice.

Thus, at the moment, such components manufactured from metals having a low melting temperature or polymers with hybrid structures have not yet appeared in the field of additive manufacturing.

### Summary of the invention

The present invention provides a method for printing a sensor, comprising the following steps: step S1, spreading a second powder in a forming cylinder of a binder jetting apparatus, and performing printing by glue jetting from bottom to top according to a sensor model, to form a sensor; step S2, spreading a first powder in the forming cylinder of the binder jetting apparatus, and performing printing by glue jetting from bottom to top according to the sensor model, to form a sensor casing and a holding cavity disposed in the sensor casing, wherein the sensor casing has an opening at the top and a first accommodating space in the middle, and the holding cavity has a top opening and a second accommodating space; step S3, lifting the holding cavity upward, and recovering the first powder in the holding cavity; step S4, placing the sensor in the sensor casing, and removing glue in the sensor and the sensor casing; step S5, sintering the sensor and the sensor casing, to form the sensor component, and at the same time using a method of chemical dissolution or decomposition by heating to remove glue in the sensor and the sensor casing.

Furthermore, steps S1 and S2 are performed separately at the same time or performed separately according to a sequence.

Furthermore, multiple holes or slots are also provided in a sidewall of the holding cavity.

Furthermore, the thickness of the sensor casing is greater than the thickness of the holding cavity.

Furthermore, the first powder is a ceramic powder or metal powder, and the second powder is a ceramic powder or metal powder metal powder.

Furthermore, the first powder and second powder are different ceramic powders or metal powders.

Furthermore, an apparatus that performs sintering in step S5 comprises a high-temperature furnace, an atmosphere furnace or a vacuum furnace.

Furthermore, step S4 further comprises the following steps: after placing the sensor in the sensor casing, continuing to spread the first powder in the forming cylinder of the binder jetting apparatus, and performing printing by glue jetting from bottom to top according to the sensor model, continuing to form a casing top cover part on the buffer layer, so as to form the closed sensor casing having the first accommodating space.

Furthermore, step S1 further comprises the following step: spreading an electrically conductive electrode slurry on an upper surface of the sensor.

Furthermore, step S2 further comprises the following step: providing the sensor casing with an electrically conductive slot.

An advantage of using the binder jetting apparatus to manufacture the sensor component is that the binder jetting apparatus does not use a high energy beam with a high production cost, so power consumption is reduced. At the same time, the printing head can be joined to several thousand nozzles, so can be faster than an ordinary 3D printing apparatus. Furthermore, the binder jetting apparatus is more suitable for manufacturing sensor components that are mainly printed from ceramic and metal powders; thus, by using the sensor printing method provided in the present invention, production capability can be expanded considerably.

The present invention can directly manufacture a component with an embedded structure by an additional sintering process, without an additional welding process.

The present invention can ensure that the sensor casing manufactured has good mechanical strength, wherein the sensor casing and sensor have contact stability. Furthermore, the sensor component manufactured in the present invention has good functional characteristics (functional performance). The present invention can also allow sensors and cases with internal structures to have complex shapes and high flexibility.

### Brief description of the drawings

Fig. 1 is a structural schematic drawing of the binder jetting apparatus provided in the present invention.
Figs. 2A - 2C are flow diagrams of a process for forming a sensor component using the binder jetting apparatus according to a particular embodiment of the present invention.

### Detailed description of the invention

Particular embodiments of the present invention are explained below in conjunction with the drawings.

The present invention provides a novel, low-cost additive manufacturing process that uses binder jetting technology. Through the method provided in the present invention, a component housing and an embedded sensor can be sintered at the same time, and the component can attain good mechanical performance and function.

The present invention provides a method for printing a sensor, which uses binder jetting 3D printing technology to separately form a sensor and a casing thereof in a sensor component; in addition, the formed sensor and casing thereof first undergo glue jetting but are not sintered, then the sensor and casing thereof have the glue removed and are sintered to finally form the completed sensor component.

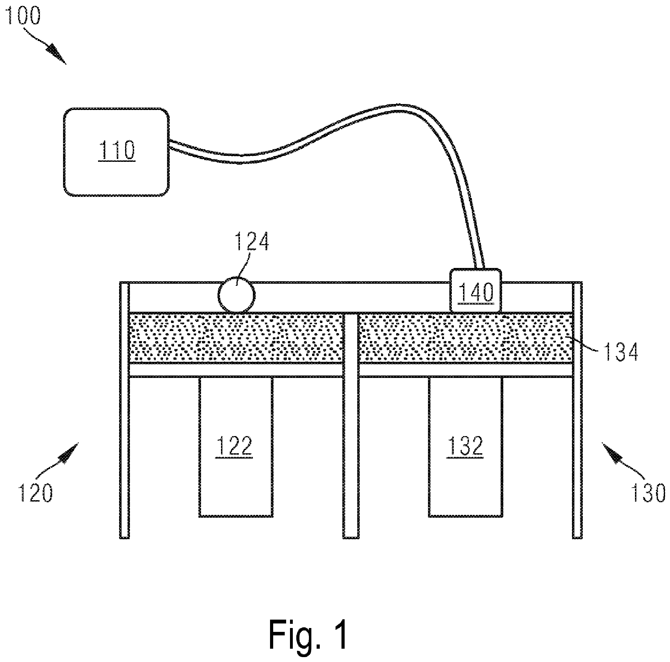

Fig. 1 is a structural schematic drawing of the binder jetting apparatus provided in the present invention. Binder jetting technology makes use of laser sintering technology, and uses a powder bed. An inkjet printing head jets a binder into a material (generally a powder) used for 3D printing, such that the powder not only binds to itself but also joins to a previous powder material layer by permeation, and is superposed layer by layer to form a prototype member; high-temperature sintering is then performed to remove the binder and promote fusion and linking of the powder particles with each other, thereby obtaining a 3D printed member of ideal density and strength. Binder jetting technology is suitable for printing metal and ceramic materials. As shown in Fig. 1, the binder jetting apparatus 100 comprises a liquid binder feeding means 110, a powder delivery cylinder 120, a forming cylinder 130 and a jet head 140. A first piston 122 is provided below a space for accommodating a printing powder in the powder delivery cylinder 120; as the first piston 122 moves vertically upward, the printing powder can be lifted upward in its entirety, then a roller 124 thereabove delivers the printing powder into the forming cylinder 130 by rolling left and right in a plane. A second piston 132 is also provided below a powder bed 134 of the forming cylinder 130; in the process of 3D printing, the second piston 132 moves downward, so as to form a printing space in the forming cylinder 130. The liquid binder feeding means 110 is configured to supply a liquid binder to the jet head 140; the jet head 140 jets the binder into the printing powder of the powder bed 134, such that the powder is bound together in a permeating manner by means of the binder, and is superposed layer by layer from bottom to top to form a 3D prototype member. The prototype member formed by binder jetting technology has still not undergone sintering, and is equivalent to a green body formed on the basis of a 3D printing model.

It must be explained that another strength of binder jetting technology is its ability to print multiple identical prototype members from bottom to top, with higher efficiency and better controllability.

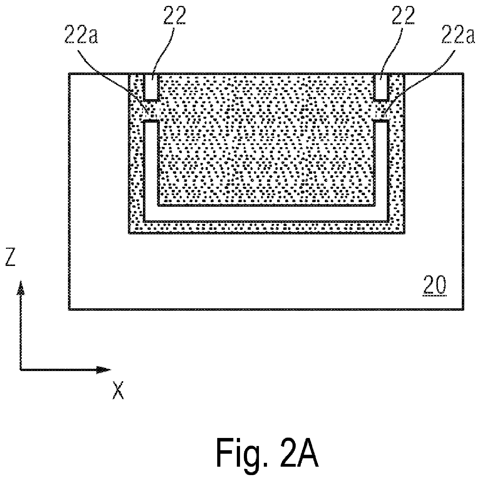

According to a particular embodiment of the present invention, step S1 is performed first. A second powder is spread in the forming cylinder 130 of the binder jetting apparatus 100, and printing by glue jetting is performed from bottom to top according to a sensor model, to individually form a sensor 24 as shown in Figs. 2A - 2C. Specifically, the second powder (not shown) is spread fully in the powder bed 134 in the forming cylinder 130 of the binder jetting apparatus 100; the second powder is a metal powder. The jet head 140 jets the binder into the second powder of the powder bed 134, such that the second powder is bound together in a permeating manner by means of the binder, and is superposed layer by layer from bottom to top to form a prototype member of the sensor 24 in an integrally formed manner.

Step S2 is then performed. A first powder is spread in the forming cylinder 130 of the binder jetting apparatus 100, and printing by glue jetting is performed from bottom to top according to the sensor model, to form a sensor casing 20 and a holding cavity 22 disposed in the sensor casing 20, wherein the sensor casing has an opening at the top and a first accommodating space in the middle, and the holding cavity 22 has a top opening and a second accommodating space 22a. As shown in Fig. 2A, the arrow direction Z shown in the figure indicates this printing direction, i.e. the vertical direction from bottom to top. Specifically, the first powder is spread fully in the powder bed 134 in the forming cylinder 130 of the binder jetting apparatus 100; the first powder may be a ceramic powder or a metal powder. The jet head 140 jets the binder into the first powder of the powder bed 134, such that the first powder is bound together in a permeating manner by means of the binder, and is superposed layer by layer from bottom to top to form a prototype member of the sensor casing 20 and a prototype member of the holding cavity 22.

It must be explained that the prototype member of the sensor casing 20 and the prototype member of the holding cavity 22 have not undergone sintering; they have only been bound together by glue jetting, and are equivalent to green bodies.

The prototype member of the sensor casing 20 is typically of a "wellhead" shape, which is higher at a periphery and recessed in the middle, but is of greater thickness. In particular, the prototype member of the holding cavity 22 is also typically of a "wellhead" shape, which is higher at a periphery and recessed in the middle, but is thinner than the sensor casing 20. The holding cavity 22 is nested in the sensor casing 20, and there is first powder between the sensor casing 20 and the holding cavity 22. At the same time, the holding cavity 22 is also filled with the first powder.

It must be explained that it is only necessary for the shapes of the sensor casing 20 and holding cavity 22 to be higher at the periphery and recessed in the middle, with an accommodating space in the middle and an opening above. Moreover, the sensor casing 20 only needs to be able to accommodate the holding cavity 22 and be spaced apart therefrom by a certain distance. Furthermore, the holding cavity 22 also needs to accommodate the sensor. Thus, the shapes of the sensor casing 20 and the holding cavity 22 may be selected according to the particular application scenario.

In particular, the thickness of the sensor casing 20 is greater than the thickness of the holding cavity 22.

The first powder is a metal powder or ceramic powder, and the second powder is a metal powder. When the first powder and second powder are both metal powders, they may be different types of metal powder.

It must be explained that the prototype member of the sensor 24 has not undergone sintering; it has only been bound together by glue jetting, and is equivalent to a green body.

It must be explained that in the embodiment above, steps S1 and S2 are performed separately according to a sequence, i.e. step S1 is performed first and then step S2 is performed. In addition, optionally, it is also possible to perform step S2 first and then perform step S1. Steps S1 and S2 may also be performed separately at the same time, i.e. performed separately at the same time in different binder jetting apparatuses. That is to say, steps S1 and S2 do not have a required sequence.

Step S3 is then performed. The holding cavity 22 as shown in Fig. 2A is lifted upward; the first powder in the holding cavity 22 will also be carried away upward with the holding cavity 22. Thus, the first powder in the holding cavity 22 has not yet been used, and can be recovered and recycled. Thus, another strong point of the present invention is in being environmentally friendly and having a low production cost.

It must be explained that the first powder between the sensor casing 20 and the holding cavity 22 still remains in the sensor casing 20. In fact, not all of the first powder in the holding cavity 22 can be carried away and recovered, and some will remain in the sensor casing 20. Moreover, in the process of the holding cavity 22 being lifted upward, first powder will also fall from the interior thereof into the sensor casing 20. These residues of first powder will not produce a negative effect; they can subsequently serve as a buffer between the sensor 24 and the sensor casing 20, to increase the stability of the sensor in the sensor casing.

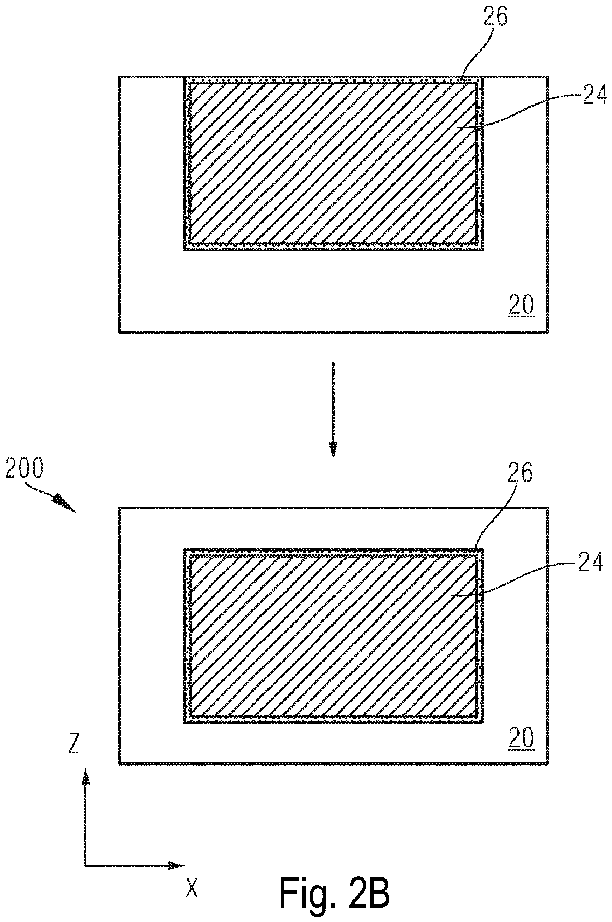

Step S4 is then performed. As shown in Fig. 2b, the sensor 24 is placed in the sensor casing 20, wherein there is first powder remaining from step S2 between the sensor casing 20 and the holding cavity 22, this first powder serving as a buffer layer 26. Specifically, after the sensor 24 has been placed in the sensor casing 24, first powder is spread in the forming cylinder 130 of the binder jetting apparatus 100, and printing by glue jetting is performed from bottom to top according to the sensor model, continuing to form a casing top cover part on top of an upper surface of the buffer layer 26 and an upper surface of the sensor casing 20, so as to form the closed sensor casing 20 having the first accommodating space. Before sintering is performed, the glue in the sensor 24 and the sensor casing 20 must be removed, wherein chemical dissolution or decomposition by heating can be used according to the type of glue used.

Finally, step S5 is performed. The prototype member of the sensor 24 and the prototype member of the sensor casing 20 are sintered, to form the sensor component 200. Specifically, apparatuses for performing sintering include high-temperature furnaces, atmosphere furnaces and vacuum furnaces. In particular, in order to achieve high density and suitable mechanical strength (acceptable mechanical strength), the temperature value range is 1000°C - 1300°C for 316L (stainless steel material) or In718 (high-temperature alloy material) and In625 material (high-temperature alloy material); such temperatures are close to the sintering temperature of functional materials, e.g. PZT ceramic and thermoelectric CaMnO₃, wherein the temperature value range for PZT ceramic sintering is 1120°C - 1200°C, and the temperature value range of thermoelectric CaMnO₃ is lower than 1200°C. Preferably, a single sintering process can also be optimized by adjusting to a suitable sintering temperature for the sensor casing material and the sensor material separately; this enables control of the adjustment of particle size (the adjustment of particle size distribution).

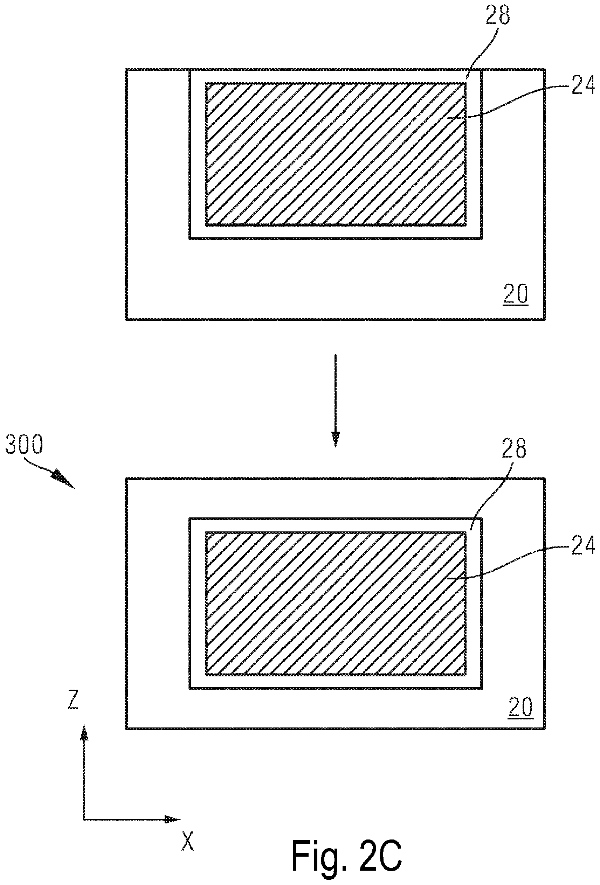

The finished sensor component 200 shown in Fig. 2B is made by the method described above. According to another variant of this embodiment, in the present invention the metal powder between the sensor casing 20 and the holding cavity 22 can also be sintered at the same time to form a material layer 28 with a close texture, thereby forming a sensor component 300 as shown in Fig. 2C.

Preferably, multiple holes or slots 22a are also provided in a sidewall of the holding cavity 22. Thus, when the holding cavity 22 is lifted upward in step S3, first powder will fall through the holes or slots 22a into the first accommodating space of the sensor casing 20, in order to serve as a buffer layer.

Furthermore, step S1 further comprises the following step: spreading an electrically conductive electrode slurry on an upper surface of the sensor. Especially when the sensor material is ceramic, if an electrode needs to be provided on the sensor, then such an electrically conductive electrode slurry coating is needed to serve as the electrode. Preferably, the present invention selects a platinum electrode slurry as the electrically conductive electrode slurry coating to serve as the electrode, such that sintering can be performed at the same time in step S2, with no need for separation into two steps.

Correspondingly, in order to cooperate with the electrode on the sensor, the sensor casing is provided with an electrically conductive slot. This is because the electrode needs to be led out; thus the electrically conductive slot is used for leading the electrode on the sensor out for connection.

An advantage of using the binder jetting apparatus to manufacture the sensor component is that the binder jetting apparatus does not use a high energy beam with a high production cost, so power consumption is reduced. At the same time, the printing head can be joined to several thousand nozzles, so can be faster than an ordinary 3D printing apparatus. Furthermore, the binder jetting apparatus is more suitable for manufacturing sensor components that are mainly printed from ceramic and metal powders; thus, by using the sensor printing method provided in the present invention, production capability can be expanded considerably.

The present invention can directly manufacture a component with an embedded structure by an additional sintering process, without an additional welding process.

The present invention can ensure that the sensor casing manufactured has good mechanical strength, wherein the sensor casing and sensor have contact stability. Furthermore, the sensor component manufactured in the present invention has good functional characteristics (functional performance). The present invention can also allow sensors and cases with internal structures to have complex shapes and high flexibility.

Although the content of the present invention has been described in detail through the preferred embodiments above, it should be recognized that the description above should not be regarded as limiting the present invention. Various amendments and substitutions to the present invention will be obvious to a person skilled in the art after reading the above content. Thus, the scope of protection of the present invention should be defined by the attached claims. Furthermore, no reference label appearing in a claim should be regarded as limiting the claim concerned; the word "comprises" does not exclude other apparatuses or steps not set out in the claims or description; and words such as "first" and "second" are merely used to indicate designations, without indicating any specific order.

## Claims

1. A method for printing a sensor, comprising the following steps:
step S1, spreading a second powder in a forming cylinder (132) of a binder jetting apparatus (100), and performing printing by glue jetting from bottom to top according to a sensor model, to form a sensor (24);
step S2, spreading a first powder in the forming cylinder (132) of the binder jetting apparatus (100), and performing printing by glue jetting from bottom to top according to the sensor model, to form a sensor casing (20) and a holding cavity (22) disposed in the sensor casing, wherein the sensor casing has an opening at the top and a first accommodating space in the middle, and the holding cavity (22) has a top opening and a second accommodating space;
step S3, lifting the holding cavity (22) upward, and recovering the first powder in the holding cavity (22);
step S4, placing the sensor (24) in the sensor casing (20) ;
step S5, sintering the sensor (24) and the sensor casing (20), to form the sensor component (200, 300), and at the same time using a method of chemical dissolution or decomposition by heating to remove glue in the sensor component (200, 300).

2. The method for printing a sensor as claimed in claim 1, **characterized in that** steps S1 and S2 are performed separately at the same time or performed separately according to a sequence.

3. The method for printing a sensor as claimed in claim 1, **characterized in that** multiple holes or slots (22a) are also provided in a sidewall of the holding cavity (22).

4. The method for printing a sensor as claimed in claim 1, **characterized in that** the thickness of the sensor casing (20) is greater than the thickness of the holding cavity (22).

5. The method for printing a sensor as claimed in claim 1, **characterized in that** the first powder is a ceramic powder or metal powder, and the second powder is a ceramic powder or metal powder.

6. The method for printing a sensor as claimed in claim 1, **characterized in that** the first powder and second powder are different ceramic powders or metal powders.

7. The method for printing a sensor as claimed in claim 1, **characterized in that** an apparatus that performs sintering in step S5 comprises a high-temperature furnace, an atmosphere furnace or a vacuum furnace.

8. The method for printing a sensor as claimed in claim 1, **characterized in that** step S4 further comprises the following steps:
after placing the sensor (24) in the sensor casing (20), continuing to spread the first powder in the forming cylinder (132) of the binder jetting apparatus (100), and performing printing by glue jetting from bottom to top according to the sensor model, continuing to form a casing top cover part on a buffer layer (26), so as to form the closed sensor casing (20) having the first accommodating space.

9. The method for printing a sensor as claimed in claim 1, **characterized in that** step S1 further comprises the following step:
spreading an electrically conductive electrode slurry on an upper surface of the sensor (24).

10. The method for printing a sensor as claimed in claim 1, **characterized in that** step S2 further comprises the following step:
providing the sensor casing (20) with an electrically conductive slot.
